**Europäisches Patentamt**

(19) **European Patent Office**

**Office européen des brevets**

(11) Numéro de publication: **0 248 699**
**B1**

(12) # FASCICULE DE BREVET EUROPEEN

(45) Date de publication du fascicule du brevet:
16.08.89

(51) Int. Cl.⁴: **A 47 J 37/06, F 24 C 15/10**

(21) Numéro de dépôt: **87401096.0**

(22) Date de dépôt: **14.05.87**

(54) Dispositif de cuisson électrique à haut rendement, plus spécialement destiné à des restaurateurs ou à des collectivités.

(30) Priorité: **30.05.86 FR 8607794**

(43) Date de publication de la demande:
**09.12.87 Bulletin 87/50**

(45) Mention de la délivrance du brevet:
**16.08.89 Bulletin 89/33**

(84) Etats contractants désignés:
**AT BE CH DE ES GB GR IT LI LU NL SE**

(56) Documents cités:
**DE-A- 2 639 381**
**US-A- 3 317 709**
**US-A- 4 164 175**

(73) Titulaire: **PERRICHON, 7, Rue du Languedoc, Brétigny S/Orge Essonne (FR)**

(72) Inventeur: Perrichon, François, 17 Rue de Bretagne, **F-91130 Ris Orangis (FR)**

(74) Mandataire: **Cabinet Pierre HERRBURGER, 115, Boulevard Haussmann, F-75008 Paris (FR)**

ACTORUM AG

## Description

La présente invention concerne un dispositif de cuisson électrique à haut rendement, plus spécialement destiné à des restaurateurs ou à des collectivités, tel que défini dans le préambule de la revendication 1.

Il n'existe pas, actuellement, sur le marché, de dispositif susceptible de garantir une cuisson satisfaisante et rapide de viandes calibrées et surgelées telles qu'elles sont quotidiennement distribuées en grande quantité aux consommateurs dans les grandes surfaces, ou les restaurants à grand débit copiés sur les «fast-foods» américains.

La présente invention a pour objet de combler cette lacune en proposant un dispositif capable de cuire, de manière rapide et efficace, aussi bien les steaks hachés que d'autres aliments tels que grillades, œufs, saucisses, pains, etc., et ce tout en respectant les règles d'hygiène élémentaire.

Ce dispositif se compose, de manière usuelle, d'une surface conductrice reposant sur un piétement et coopérant avec des organes de chauffage ainsi qu'avec des organes de réglage de la température à commande électronique.

Conformément à l'invention, le terme «surface» doit être considéré dans un sens très large et, si le dispositif est, de manière la plus générale, constitué par une surface de cuisson plane type gril, il peut dans certains cas être constitué par un dispositif creux destiné à recevoir de l'huile de friture.

On connaît par le brevet US-A-3 317 709 un dispositif de ce type dans lequel les organes de chauffage sont constitués par des résistances chauffantes bloquées de manière amovible entre la surface conductrice et une surface de maintien de forme et de dimension similaires et placée au-dessous de celle-ci, par effet de serrage de ces surfaces l'une contre l'autre, et reliées par des fils d'alimentation à des composants électriques, un tableau de manœuvre étant prévu permettant de commander l'alimentation des résistances chauffantes.

Ce dispositif présente toutefois l'inconvénient de ne pas donner entière satisfaction quant à la cuisson des steaks et d'être peu pratique à l'usage.

L'invention cherche à mettre au point un dispositif du type ci-dessus, dont la mise en œuvre soit extrêmement simple et sans danger pour le professionnel ou l'utilisateur, et dont le coût, lié à la fabrication, à l'entretien et à la maintenance, soit réduit au minimum.

Pour donner toute satisfaction, il est également essentiel que l'on puisse accéder facilement aux résistances chauffantes, notamment en cas de panne, pour permettre leur remplacement par une manœuvre simple.

A cet effet, l'invention concerne un dispositif caractérisé en ce que les composants électriques sont des composés standards du commerce câblés sur des socles enfichables et placés dans un tiroir de commande monté sur le piétement du dispositif, muni à sa partie avant du tableau de manœuvre et fermé par un capot à sa partie arrière, la surface de maintien étant constituée par une plaque de maintien métallique, notamment en acier, de même dimension que la plaque de cuisson sur laquelle elle est articulée.

L'une des caractéristiques essentielles du dispositif objet de l'invention est liée à la présence du tiroir de commande qui ne contient que des pièces standards et pouvant donc être échangées très facilement en cas de panne; de plus, en cas de gros problèmes électriques sur le matériel, ce tiroir peut être instantanément remplacé par un tiroir identique prémonté, sans occasionner d'interruption de service pouvant être très préjudiciable, notamment dans un restaurant.

Toutes les interventions sur les composants électriques se trouvant dans le tiroir sont généralement effectuées à partir de la partie arrière du dispositif (en ouvrant le capot); pour faciliter l'accès à ces différents éléments, il est intéressant de les incliner légèrement de bas en haut à partir de cette partie arrière.

Conformément à l'invention, le tiroir de commande est le plus souvent réalisé à partir d'une tôle, notamment une tôle en acier inoxydable 15/10 pleine pour les éléments de façade (capot arrière et tableau de manœuvre) et perforée pour le fond de manière à permettre une bonne ventilation de sa partie interne.

Selon une autre caractéristique de l'invention, les organes de réglage de la température sont constitués par au moins une sonde mise en place dans un perçage prévu à cet effet dans la surface conductrice et coopérant avec des régulateurs électroniques standards du commerce placés, eux aussi, dans le tiroir de commande.

Le tiroir de commande renferme donc, en fait, tous les organes «moteurs» du dispositif; pour garantir la sécurité des utilisateurs, et notamment du personnel chargé de la maintenance, il est prévu, selon une autre caractéristique de l'invention, un contacteur de sécurité monté dans le tiroir de commande et coupant l'alimentation de tous les composants électriques et électroniques en cas d'ouverture de celui-ci.

Pour améliorer le rendement du dispositif selon l'invention, il est nécessaire, d'une part, d'utiliser, de manière optimale, l'énergie transmise à la surface conductrice par les résistances chauffantes et, d'autre part, de diminuer autant que possible les pertes de chaleur.

Pour satisfaire à la première de ces exigences, la surface conductrice est, de préférence, constituée par une plaque de cuisson horizontale métallique, chromée, polie de manière à lui conférer l'aspect d'un miroir.

On peut, par exemple, utiliser une plaque en acier poli, d'épaisseur de 18 mm ayant reçu un traitement de surface en chrome pur de 60 microns et ayant été repolie par la suite pour le ramener à 50 microns; ce traitement a pour effet de rendre la plaque irradiante et donc d'améliorer ses performances.

Dans le même ordre d'idée, pour obtenir un résultat satisfaisant, il est nécessaire que les performances de la plaque de cuisson soient identiques en tout point de sa surface; dans ce but, il est nécessaire de tenir compte de la plus forte dissipation de la chaleur sur les bords de la plaque et donc de prévoir des résistances plus puissantes dans la partie latérale de la plaque que dans sa partie centrale.

On a, par exemple, pu obtenir des résultats satisfaisants en équipant la plaque de résistances latérales de 1800 watts et de résistances médianes de 1500 watts.

Pour repérer et ne pas risquer de confondre ces résistances, notamment lors d'un échange, il est avantageux de les relier au tiroir de commande par des fils d'alimentation de couleurs différentes (par exemple rouge pour 1800 watts et bleu pour 1500 watts).

Pour diminuer les pertes de chaleur et obtenir un parfait échange de chaleur entre la plaque de cuisson et les résistances chauffantes, il est nécessaire de garantir un blocage satisfaisant de ces dernières contre la plaque de cuisson.

A cet effet, et selon une autre caractéristique de l'invention, la plaque de maintien est articulée sur la plaque de cuisson, à sa partie avant, au moyen d'au moins une, de préférence deux paumelles munies de gonds et porte, à sa partie arrière, au moins une, de préférence deux pattes de fixation munies d'un perçage coopérant avec des pattes de fixation similaires prévues à la partie arrière de la plaque de cuisson pour permettre le passage de boulons permettant la fixation des deux plaques et le blocage entre celles-ci des résistances chauffantes.

Cette caractéristique permet de garantir un serrage satisfaisant des deux plaques, et donc un bon blocage des résistances chauffantes, tout en permettant d'accéder facilement à ces dernières, notamment en cas de panne, pour permettre leur remplacement, en manœuvrant simplement les boulons.

Selon une autre caractéristique de l'invention permettant de garantir un blocage maximum des résistances à leur partie avant entre les deux plaques, l'axe des gonds reliant ces dernières est incliné de façon réglable par rapport au plan de ces plaques.

Pour permettre ce réglage, on utilise le plus souvent des gonds ayant un axe excentrique et munis d'une douille de rattrapage de diamètre.

Pour améliorer le rendement du dispositif, il est également nécessaire de diminuer au maximum la dissipation d'énergie par la partie inférieure de la plaque de maintien; à cet effet et selon une autre caractéristique de l'invention, celle-ci est reliée par sa partie inférieure à un coffrage, notamment métallique, contenant un isolant thermique, notamment de la laine de roche comprimée.

Selon une autre caractéristique de l'invention, le capot fermant le tiroir de commande à sa partie arrière est muni de perforations coopérant avec des déflecteurs. Ces perforations permettent de garantir une ventilation satisfaisante des composants électriques et électroniques contenus dans le capot.

Selon une autre caractéristique de l'invention, le piétement est muni, à sa partie supérieure, d'une embase de réception de la plaque de cuisson évidée à sa partie centrale comportant deux fentes latérales longitudinales permettant l'évacuation des graisses de cuisson et communiquant, chacune, avec un coulisseau étanche ouvert à la partie avant du dispositif pour permettre la mise en place d'un tiroir de récupération des graisses.

La plaque de cuisson est fixée à l'embase, notamment par soudure au cours de la fabrication. L'ensemble constitué par l'embase et les coulisseaux étanches constitue, de préférence, un ensemble monobloc réalisé en tôle dans lequel les fentes latérales sont réalisées par emboutissage; il est préférable que ces éléments aient une forme arrondie pour faciliter le nettoyage. Dans le même but, les poignées des tiroirs de récupération des graisses sont, de préférence, réalisées sous une forme monobloc attenante à ceux-ci, laissant une façade propre et lisse.

Pour une utilisation fonctionnelle du dispositif, il est, en outre, avantageux de prévoir à l'avant de la plaque de cuisson une barre, notamment en acier inox tubulaire, permettant la mise en place de plateaux amovibles.

Par ailleurs, pour obtenir un maximum de satisfaction, il est nécessaire de munir le dispositif d'organes de sécurité susceptibles de contrôler la bonne marche de chacune des résistances chauffantes. Ces organes peuvent, de manière avantageuse, être constitués par des voyants lumineux, mis en place sur le tableau de manœuvre et s'allumant automatiquement pendant une durée prédéterminée lors de la mise en marche du dispositif; il est, bien entendu, nécessaire de prévoir un nombre de voyants identique à celui des résistances chauffantes.

Les caractéristiques du dispositif qui fait l'objet de l'invention seront décrites plus en détail en se référant aux dessins annexés, dans lesquels:

— la figure 1 est une vue en perspective de la partie avant du dispositif,

— la figure 2 est une vue arrière du dispositif auquel on a enlevé le capot arrière,

— la figure 3 représente la plaque de cuisson et la plaque de maintien en position ouverte,

— la figure 4 représente la face arrière du capot arrière,

— la figure 5 représente la face avant de ce même capot.

Les figures représentent le cas particulier dans lequel la surface conductrice est constituée par une plaque chauffante horizontale; comme il a été déjà indiqué, ce cas particulier ne doit être considéré qu'à titre d'exemple et la surface chauffante pourrait être autre, sans pour cela sortir du cadre de l'invention.

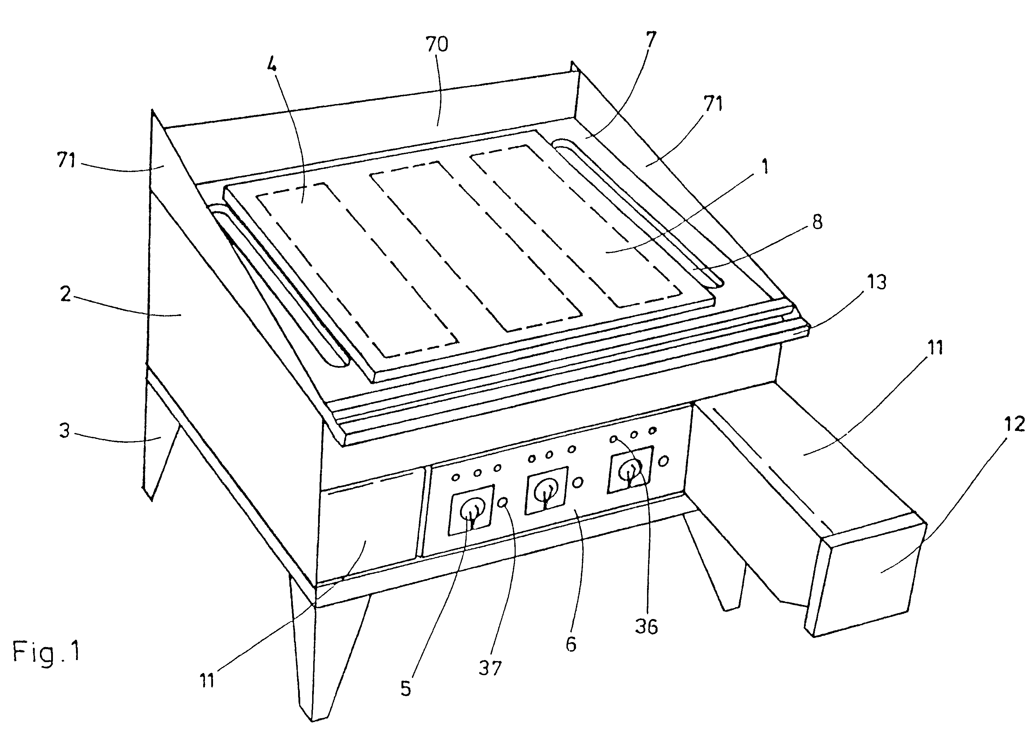

Selon la figure 1, le dispositif objet de l'invention se compose schématiquement d'une plaque chauffante horizontale 1 reposant sur un piétement 2 muni de pieds 3.

Pour permettre son chauffage, la plaque 1 coopère, à sa partie inférieure, avec des résistances chauffantes 4 dont l'alimentation en courant électrique est commandée à partir de boutons de commande 5 placés sur un tableau de manœuvre 6 se trouvant à l'avant du dispositif.

Les dessins représentent trois groupes de trois résistances 4 associés, chacun, à un bouton 5. Il ne s'agit bien entendu là que d'un exemple de configuration qui n'est nullement limitatif de l'invention.

La plaque de cuisson 1 est en acier chromé poli; elle repose sur une embase de réception 7 évidée à sa partie centrale et prévue à la partie supérieure du piétement 2, à laquelle elle est soudée. Comme on peut le voir sur la figure 1, l'embase 7 est munie, sur sa périphérie, d'une tôle de protection arrière rectangulaire 70, ainsi que de deux tôles de protection latérales triangulaires 71; cette embase comporte, en outre, de part et d'autre de la plaque de cuisson 1, deux fentes longitudinales 8 dont le rôle est de permettre l'évacuation des graisses.

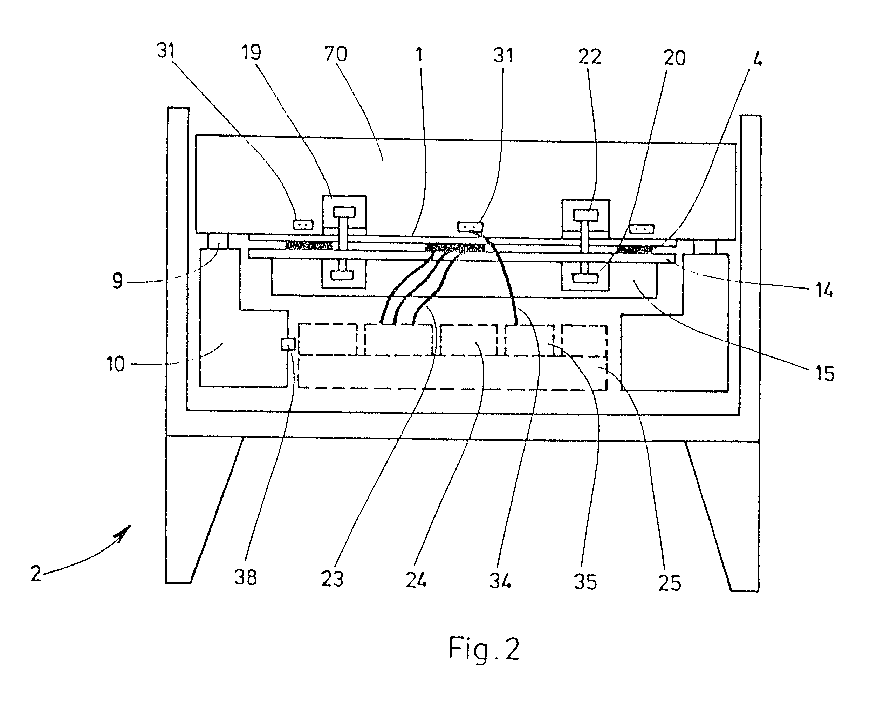

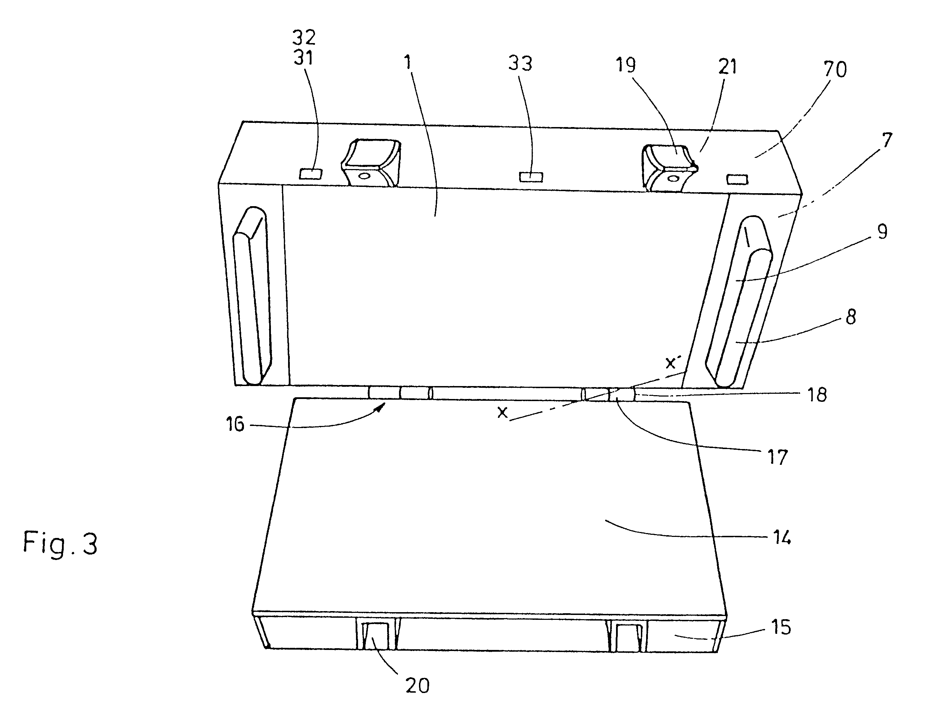

Ces fentes communiquent avec deux tubulures d'écoulement 9, obtenues par emboutissage, qui sont visibles sur la figure 3 et partiellement sur la figure 2.

Selon les figures 1 et 2, ces tubulures d'écoulement débouchent dans des boîtiers 10 du piétement 2 qui sont ouverts à leur partie avant pour faire office de coulisseaux pour des tiroirs de récupération des graisses 11 placés de part et d'autre du tableau de manœuvre 6 (figure 1).

Dans le but de faciliter l'entretien du dispositif, les poignées 12 de ces tiroirs 11 de récupération des graisses sont réalisées d'une forme monobloc attenante à ceux-ci.

Par ailleurs, et selon la figure 1, le dispositif comporte, à la partie avant de la plaque de cuisson 1, une barre 13 permettant la mise en place de plateaux amovibles.

Selon les figures 2 et 3, les résistances 4 sont bloquées de manière amovible entre la plaque de cuisson 1 qui est soudée à sa partie latérale sur l'embase 7 et une plaque de maintien en acier 14 de forme et de dimension équivalentes; pour diminuer au maximum les pertes de chaleur par la face inférieure de la plaque de maintien 14, celle-ci est reliée à un coffrage 15 contenant un isolant thermique tel que de la laine de roche comprimée; ce coffrage peut, par exemple et de manière non représentée, être réalisé à partir d'éléments raidisseurs plats en acier inoxydable.

Pour permettre la mise en place des résistances chauffantes entre les deux plaques 1 et 14 et leur remplacement en cas de panne, celles-ci sont articulées entre elles à la partie avant du dispositif (visible sur la figure 1) au moyen de deux paumelles 16 munies de gonds 17 dont l'axe x-x' est incliné par rapport au plan des plaques 1 et 14; cette inclinaison peut être modifiée à partir d'une douille de rattrapage 18; la manœuvre de la douille 18 permet d'obtenir un serrage maximum des plaques 1 et 14, et donc des résistances 4 entre celles-ci.

Pour bloquer l'ensemble ainsi constitué en position fermée, les plaques 1 et 14 sont respectivement munies, à leur partie arrière, de pattes de fixation 19, 20 comportant en leur partie centrale des perçages se correspondant 21 destinés à recevoir des boulons de fixation 22 représentés sur la figure 2. Après blocage de ces boulons, les résistances 4 sont donc intimement bloquées contre la plaque de cuisson 1, dont elles peuvent assurer le chauffage de manière optimale. Pour permettre l'alimentation en électricité de ces résistances 4, celles-ci sont reliées au moyen de fils d'alimentation standards 23, dont trois ont été représentés à titre d'exemple sur la figure 2 à des composants électriques standards du commerce 24 câblés sur des socles enfichables; pour des raisons de brièveté, ceux-ci ne seront pas décrits plus en détail dans la suite de cet exposé.

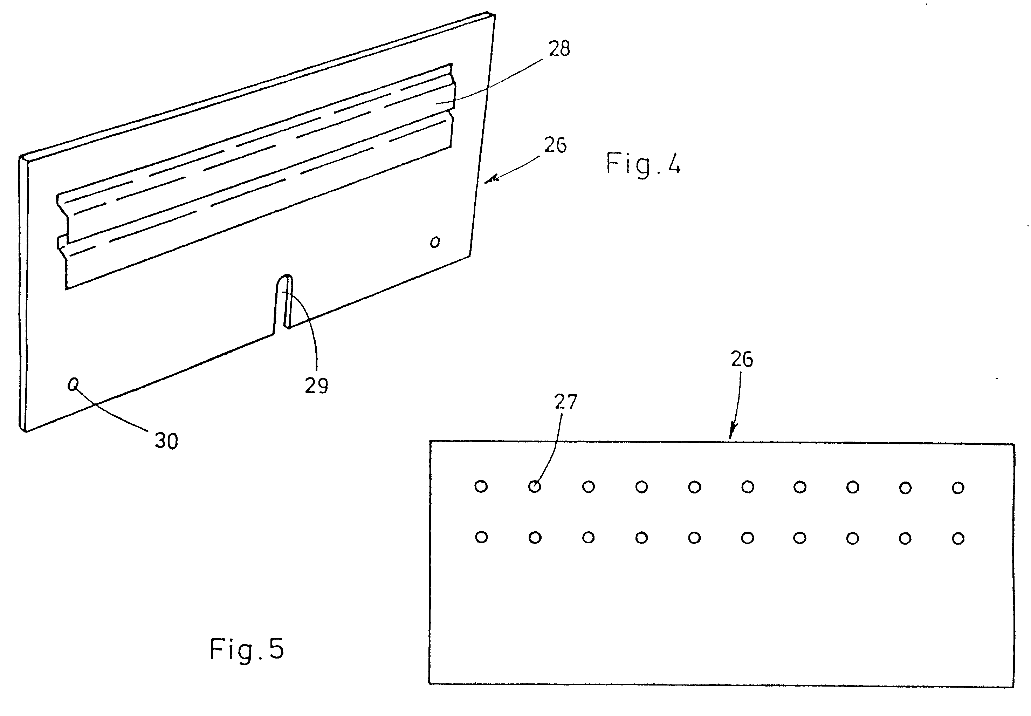

Ces composants électriques 24 sont disposés dans un tiroir de commande 25 représenté en pointillés sur la figure 2 et mis en place dans un logement spécialement prévu à cet effet du piétement 2; de façon non représentée, ce tiroir est constitué par des tôles latérales planes et par une tôle de fond perforée permettant d'assurer une parfaite ventilation de l'ensemble du dispositif. Le tiroir est fermé, à sa partie avant, par le tableau de manœuvre 6 représenté sur la figure 1, et à sa partie arrière par un capot arrière 26 qui est représenté sur les figures 4 et 5; ce capot est constitué par une tôle, notamment en acier inoxydable, munie de perforations 27 (figure 5) assurant la ventilation, sur lesquelles sont soudés des déflecteurs de sécurité 28 (figure 4). Le capot 26 est, en outre, muni d'un orifice 29 permettant le passage du fil d'alimentation générale du dispositif, ainsi que de serrures 30 permettant le verrouillage du dispositif.

Un contacteur de sécurité 38 est monté sur le piétement 2 du dispositif pour couper l'alimentation de tous les composants électriques 24 en cas d'ouverture du tiroir 25.

Par ailleurs, le dispositif objet de l'invention est muni d'organes permettant une régulation de la température; ceux-ci sont constitués par trois sondes 31 du type thermocouple, mises en place dans des perçages 32 prévus à cet effet à la partie arrière de la plaque de cuisson 1. Ces perçages sont, en outre, fermés par des plaquettes 33. Selon la figure 2, ces sondes 31 sont reliées au moyen de conducteurs 34 à des régulateurs électroniques standards du commerce 35 mis en place eux aussi dans le tiroir de commande 25. Ce dernier comporte donc tous les organes de commande du dispositif, ce qui, comme il a déjà été indiqué, est extrêmement pratique en cas d'échange.

Par ailleurs, et selon la figure 1, le dispositif comporte, pour faciliter son utilisation, des organes permettant de vérifier le bon fonctionnement de chacune des résistances chauffantes 4. Ces organes sont constitués par des voyants lumineux 36 associés à chacune des résistances électriques et s'allumant automatiquement pendant une durée de 5 à 6 secondes à chaque mise en marche du dispositif à partir du bouton 5. Des voyants lumineux 37 d'une couleur différente servent, par ailleurs, à afficher la mise sous tension de l'appareillage.

Bien entendu, la description ci-dessus ne doit être considérée qu'à titre d'exemple et pourrait donner lieu à des variantes sans pour cela sortir du cadre de l'invention telle que revendiquée dans les revendications 1 à 10.

## Revendications

1. Dispositif de cuisson électrique à haut rendement plus spécialement destiné à des restaurateurs ou à des collectivités et se composant d'une surface conductrice (1) reposant sur un piétement (2) et coopérant avec des organes de chauffage (4) ainsi qu'avec des organes (31) de réglage de la température à commande électronique, les organes de chauffage étant constitués par des résistances chauffantes (4) bloquées, de manière amovible, entre la surface conductrice (1) et une surface de maintien (14) de forme similaire placée au-dessous de celle-ci par effet de serrage de ces surfaces l'une contre l'autre, et reliées par des fils d'alimentation (23) à des composants électriques (24), un tableau de manœuvre (6) étant prévu, permettant de commander l'alimentation des résistances chauffantes (4), dispositif caractérisé en ce que les composants électriques (24) sont des composés standards du commerce câblés sur des socles enfichables et placés dans un tiroir de commande (25) monté sur le piétement (2) du dispositif, muni à sa partie avant du tableau de manœuvre (6) et fermé par un capot (26) à sa partie arrière, la surface de maintien étant constituée par une plaque de maintien métallique (14), notamment en acier, de même dimension que la plaque de cuisson (1) sur laquelle elle est articulée.

2. Dispositif selon la revendication 1, caractérisé en ce que les organes de réglage de la température sont constitués par au moins une sonde (31) mise en place dans un perçage (32) prévu à cet effet dans la surface conductrice (1) et coopérant avec des régulateurs électroniques standards du commerce (35) placés dans le tiroir de commande (25).

3. Dispositif selon l'une quelconque des revendications 1 et 2, caractérisé en ce que la surface conductrice est constituée par une plaque de cuisson horizontale métallique chromée (1), notamment en acier chromé, polie de manière à lui conférer l'aspect d'un miroir.

4. Dispositif selon l'une quelconque des revendications 1 à 3, caractérisé en ce que la plaque de maintien (14) est articulée sur la plaque de cuisson (1), à sa partie avant, au moyen d'au moins une, de préférence deux paumelles (16) munies de gonds (17) et porte, à sa partie arrière, au moins une, de préférence deux pattes de fixation (20) munies d'un perçage (21) coopérant avec des pattes de fixation (19) similaires prévues à la partie arrière de la plaque de cuisson (1) pour permettre le passage de boulons (22) permettant la fixation des deux plaques (1, 14) et le blocage entre celles-ci des résistances chauffantes (4).

5. Dispositif selon la revendication 4, caractérisé en ce que l'axe (x-x') des gonds (17) reliant les deux plaques (1, 14) est incliné de façon réglable par rapport au plan de ces plaques.

6. Dispositif selon l'une quelconque des revendications 4 et 5, caractérisé en ce que la plaque de maintien (14) est reliée par sa partie inférieure à un coffrage (15), notamment métallique, contenant un isolant thermique, notamment de la laine de roche comprimée.

7. Dispositif selon l'une quelconque des revendications 1 à 6, caractérisé en ce qu'il comporte un contacteur de sécurité (38) monté dans le tiroir de commande (25) et coupant l'alimentation de tous les composants électriques (24) et électroniques (35) en cas d'ouverture de celui-ci.

8. Dispositif selon l'une quelconque des revendications 1 à 7, caractérisé en ce que le capot (26) fermant le tiroir de commande (25) à sa partie arrière est muni de perforations (27) coopérant avec des déflecteurs (28) pour permettre la ventilation des composants électriques (24) et électroniques (35).

9. Dispositif selon l'une quelconque des revendications 1 à 8, caractérisé en ce que le piétement (2) est muni, à sa partie supérieure, d'une embase de réception (7) de la plaque de cuisson (1) évidée à sa partie centrale comportant deux fentes latérales longitudinales (8), permettant l'évacuation des graisses de cuisson et communiquant, chacune, avec un coulisseau étanche (10) ouvert à la partie avant du dispositif pour permettre la mise en place d'un tiroir de récupération des graisses (11).

10. Dispositif selon l'une quelconque des revendications 1 à 9, caractérisé en ce qu'il comporte des organes (36) de contrôle de la bonne marche de chacune des résistances chauffantes (4).

## Patentansprüche

1. Elektrische Kochvorrichtung hohen Wirkungsgrades, insbesondere für Gaststätten und Grossküchen, bestehend aus einer auf einem Gestell (2) ruhenden und mit Heizmitteln (4) und Mitteln (31) zur Temperaturregelung mit elektronischer Steuerung zusammenarbeitenden, leitenden Fläche (1), wobei die Heizmittel aus auf entfernbare Weise zwischen der leitenden Fläche (1) und einer unter dieser angeordneten Haltefläche (14) ähnlicher Form durch Gegeneinanderdrücken dieser Flächen festgehaltenen und durch Versorgungsdrähte (23) mit elektrischen Bauteilen (24) verbundenen Heizwiderständen (4) bestehen, wobei eine Steuertafel (6) zur Regelung der Stromversorgung der Heizwiderstände (4) vorgesehen ist, Vorrichtung, dadurch gekennzeichnet, dass die elektrischen Bauteile (24) auf Stecksockeln verdrahtete und in einem im Gestell (2) der Vorrichtung eingebauten, auf seiner Vorderseite mit der Steuertafel (6) versehenen und auf seiner Rückseite durch eine Blende (26) abgeschlossenen Einschub (25) angeordnete, im Handel befindliche Standardkomponenten sind, wobei die Haltefläche aus einer Halteplatte (14) aus Metall, insbesondere aus Stahl, gleicher Grösse, wie die Kochplatte (1) besteht, mit der sie gelenkig verbunden ist.

2. Vorrichtung nach Patentanspruch 1, dadurch gekennzeichnet, dass die Mittel zur Temperaturregelung aus mindestens einer in einer zu diesem Zweck in der leitenden Fläche (1) vorgesehenen Durchbrechung (32) angeordneten und mit im Einschub (25) angeordneten, im Handel befindlichen, elektronischen Standardreglern (35) zusammenarbeitenden Sonde (31) bestehen.

3. Vorrichtung nach irgendeinem der Patentansprüche 1 und 2, dadurch gekennzeichnet, dass die leitende Fläche aus einer horizontalen, verchromten Kochplatte (1) aus Metall, insbesondere aus verchromtem Stahl besteht, die derart poliert ist, dass sie das Aussehen eines Spiegels erhält.

4. Vorrichtung nach irgendeinem der Patentansprüche 1 bis 3, dadurch gekennzeichnet, dass die Halteplatte (14) auf ihrer vorderen Seite mittels mindestens einer und vorzugsweise zweier mit Angeln (17) versehener Fitschen (16) mit der Kochplatte (1) gelenkig verbunden ist und auf ihrer hinteren Seite mindestens eine und vorzugsweise zwei mit einer Durchbrechung (21) versehene Befestigungsklammern (20) trägt, die mit einer mit ähnlichen, auf der hinteren Seite der Kochplatte (1) vorgesehenen Befestigungsklammern (19) zusammenarbeitenden Durchbrechung (21) zur Ermöglichung des Durchtritts eines die Befestigung der beiden Platten (1, 14) und die Befestigung der Heizwiderstände (4) zwischen ihnen ermöglichenden Bolzens (22) versehen sind.

5. Vorrichtung nach Patentanspruch 4, dadurch gekennzeichnet, dass die Achse (x-x') der die beiden Platten (1, 14) verbindenden Angeln (17) auf einstellbare Weise relativ zur Ebene dieser Platten geneigt ist.

6. Vorrichtung nach irgendeinem der Patentansprüche 4 und 5, dadurch gekennzeichnet, dass die Halteplatte (14) durch ihren unteren Teil mit einem insbesondere metallischen, eine Wärmeisolierung, insbesondere komprimierte Gesteinsfasern, enthaltenden Kasten (15) verbunden ist.

7. Vorrichtung nach irgendeinem der Patentansprüche 1 bis 6, dadurch gekennzeichnet, dass sie einen im Einschub (24) eingebauten Sicherheitsschalter (38) aufweist, der bei Offnung des Einschubs die Stromversorgung aller elektrischen (24) und elektronischen (35) Bauteile unterbricht.

8. Vorrichtung nach irgendeinem der Patentansprüche 1 bis 7, dadurch gekennzeichnet, dass die den Einschub (25) auf dessen Rückseite abschliessende Blende (26) mit mit Ablenkern (28) zusammenarbeitenden Durchbrechungen (27) versehen ist, um die Belüftung der elektrischen (24) und elektronischen (35) Bauteile zu ermöglichen.

9. Vorrichtung nach irgendeinem der Patentansprüche 1 bis 8, dadurch gekennzeichnet, dass das Gestell (2) in seinem oberen Teil mit einer in ihrem mittleren Teil eine Aussparung aufweisenden Sitzfläche (7) zur Aufnahme der Kochplatte (1) versehen ist, die seitlich zwei längliche Schlitze (9) zur Ermöglichung des Ablaufens der Kochfette aufweist, die jeweils mit einer dichten, zur Ermöglichung des Einschiebens einer Schublade (11) zum Auffangen der Fette zum Vorderteil der Vorrichtung offenen Gleitführung (10) verbunden sind.

10. Vorrichtung nach irgendeinem der Patentansprüche 1 bis 9, dadurch gekennzeichnet, dass sie Mittel (36) zur Kontrolle der Funktion jedes der Heizwiderstände (4) aufweist.

## Claims

1. A high-efficiency electric cooker intended more particularly for restaurants or canteens and consisting of a conductive surface (1) resting on a mounting (2) and co-operating with heating means (4) and with electronically controlled temperature control means (31), the device being characterised in that the heating means comprise heating resistances (4) detachably locked between the conductive surface (1) and a retaining surface (14) of similar shape and dimensions situated beneath the conductive surface, and are connected by supply leads (23) to standard commercial electrical components (24) wired to plug-in bases and disposed in a control drawer (25) fitted on the mounting (2) of the device, closed by a cowl (26) at the rear and provided, at the front, with a control panel (6) enabling the supply to the heating resistances (4) to be controlled.

2. A device according to claim 1, characterised in that the temperature control means comprise at least one probe (31) disposed in a bore (32) provided for this purpose in the conductive surface (1) and co-operating with standard commercial electronic controllers (35) disposed in the control drawer (25).

3. A device according to claims 1 and 2, characterised in that the conductive surface comprises a chromium-plated metal horizontal hot plate (1) made more particularly from polished chromium-plated steel of mirror finish.

4. A device according to any one of claims 1 to 3, characterised in that the retaining surface comprises a metal retaining plate (14), more particularly of steel, of the same dimensions as the hot plate (1) to which it is pivotally connected by means of a least one and preferably two hinges (16) having hinge pins (17), at its front part, and having, at the rear, at least one and preferably two fixing lugs (20) formed with bores (21) co-operating with similar fixing lugs (19) provided at the rear of the hot plate (1) to receive bolts (22) for fixing the two plates (1, 14) and locking the heating resistances (4) between them.

5. A device according to claim 4, characterised in that the axis (x-x') of the hinge pins (17) connecting the two plates (1, 14) is adjustably inclined with respect to the plane of said plates.

6. A device according to claims 4 and 5, characterised in that the retaining plate (14) is connected by its bottom part to a casing (15), more particularly a metal casing, containing a thermal insulator, more particularly compressed rock wool.

7. A device according to any one of claims 1 to 6, characterised in that it comprises a safety switch (38) mounted in the control drawer (25) and breaking the power supply to all the electrical components (24) and electronic components (35) in the event of the drawer being opened.

8. A device according to any one of claims 1 to 7, characterised in that the cowl (26) closing the rear part of the control drawer (25) is formed with perforations (27) co-operating with deflectors (28) to allow ventilation of the electrical components (24) and electronic components (35).

9. A device according to any one of claims 1 to 8, characterised in that the top of the mounting (2) has a base (7) to receive the hot plate (1), said base being hollowed out at the centre and having two longitudinal side slots (8) for the discharge of cooking fat or oil and each communicating with a sealed slide (10) open at the top of the device to receive a fat and oil recovery drawer (11).

10. A device according to any one of claims 1 to 9, characterised in that it has means (36) for checking correct operation of each of the heating resistances (4).

Fig.1

EP 0 248 699 B1

Fig. 2

EP 0 248 699 B1

Fig. 3

Fig.4

Fig.5

EP 0 248 699 B1